# EUROPÄISCHE PATENTSCHRIFT

(11) **EP 1 677 965 B1**
(45) Veröffentlichungstag und Bekanntmachung des Hinweises auf die Patenterteilung: **10.01.2007**
(21) Anmeldenummer: 04790614.4
(22) Anmeldetag: 19.10.2004
(51) Int. Cl.: B29C 47/50, B29C 47/42, B29C 47/52

(54) **ZAHNRADPUMPE**
GEAR PUMP
POMPE A ENGRENAGES

(30) Priorität: 22.10.2003 DE 10348985
(43) Veröffentlichungstag der Anmeldung: 12.07.2006
(73) Patentinhaber: Berstorff GmbH, 30625 Hannover (DE); VMI - AZ Extrusion GmbH, 80992 München (DE)
(72) Erfinder: UPHUS, Reinhard, 30419 Hannover (DE); SKIBBA, Olaf, 30161 Hannover (DE)
(74) Vertreter: Harrasz, Julia Konstanze
(86) Internationale Anmeldenummer: PCT/EP2004/011789
(87) Internationale Veröffentlichungsnummer: WO 2005/039859

(56) Entgegenhaltungen:
- DE-A1- 2 905 717
- DE-A1- 10 150 627
- SU-A1- 1 537 560
- US-A- 4 303 344
- US-A- 5 304 054

## Beschreibung

Die Erfindung betrifft eine Zahnradpumpe, die zur Förderung hochviskoser Materialien wie z. B. Kautschukmischungen geeignet ist.

Zahnradpumpen ermöglichen einen hohen Ausgangsdruck bei geringer Materialbelastung. Die Zahnradstufe wird hierbei oftmals in Kombination mit einer Extruderschnecke verwendet. Die DE 100 49 730 A1 zeigt eine derartige Zahnradpumpe, bei der das Material über eine Eingangsschnecke einer Zahnradstufe mit einem Planetengetriebe zugeführt wird. Das Planetengetriebe weist ein gehäusefestes Hohlrad und vier Planetenräder auf, die auf einem Planetenträger drehbar gelagert sind. Der Planetenträger ist wiederum in dem Hohlrad drehbar gelagert und weist vier sich radial von einem mittigen Grundkörper bis zur Verzahnung des Hohlrades erstreckende Trennwände auf, die um jedes Planetenrad ein sich in Förderrichtung verengendes Saugraumelement und ein sich in Förderrichtung vergrößerndes Druckraumelement ausbilden. Weiterhin ist neben dieser Ausführungsform mit verzahntem Hohlrad und unverzahntem Sonnenrad mit Planetenträger auch die als aufwändiger und komplexer eingestufte umgekehrte Anordnung mit einem verzahnten Sonnenrad und einem als Funktionsteil fungierenden Hohlrad mit mindestens einem Dichtbereich erwähnt, bei der das Hohlrad mit dem Planetenträger still stehen kann.

Bei der Zahnradpumpe der DE 100 49 730 A1 wird durch das Planetengetriebe eine hohe Pumpleistung und Selbstreinigung erreicht. Die Lagerung der Planetenräder auf dem Planetenträger ist jedoch dann problematisch, wenn Wälzlager verwendet werden sollen, da sie nicht ausreichend abgedichtet werden können. Weiterhin erfordert der zusätzliche Planetenträger mit den Dichtwänden einen höheren Fertigungsaufwand und höhere Fertigungskosten.

Die EP 0 642 913 B1 zeigt eine Einwellenschnecke mit einer Zahnradpumpe, die zwei sich kämmende Zahnräder aufweist, von denen eines auf die Schneckenwelle aufgesteckt ist. Die Zahnräder sind gehäusefest gelagert, wobei die Lagerstellen durch das geförderte hochviskose Material geschmiert werden. Das Pumpengehäuse ist formschlüssig mit dem Schneckengehäuse verbunden und besteht aus zwei achtförmigen Abdichtungsscheiben, die bündig an die Stirnseiten der beiden Zahnräder anschließen und mit Öffnungen für den Durchtritt der Schneckenwelle und der Achse des Gegenzahnrads versehen sind. An den Abdichtungsplatten oder am Schneckengehäuse in Höhe der Abdichtungsplatten ist je ein zum Schneckenraum hin offenes Produktdurchtrittsfenster vorgesehen. Eine derartige Zahnradpumpe ermöglicht einen Antrieb des Wellenzahnrads über die Schneckenwelle und eine gehäusefeste Lagerung des Gegenzahnrads. Der Selbstreinigungseffekt ist jedoch gering.

Die WO 00/53390 A1 zeigt eine ähnliche Zahnradpumpe, bei der Material in radialer Richtung zwei sich kämmenden Zahnrädern zugeführt und über eine mit einem der Zahnräder verbundene Extruderschnecke abgeführt wird. Hierbei ist in einem Anfangsbereich der Extruderschnecke ein Transfermixbereich vorgesehen, in dem ein im Extrudergehäuse ausgebildeter, sich schraubenförmig und gegensinnig zur Wendelung der Schneckenwelle verlaufender Gang in seinem Querschnitt zugunsten der sich vergrößernden Schneckenwellenkammer abnimmt. Durch einen derartigen Transfermixbereich wird zusätzlich zu der Förderwirkung eine Vermischung des hochviskosen Materials bewirkt. Das Material wird von einem gemeinsamen Auslass der sich kämmenden Zahnräder in den Gang des Transfermixbereiches eingegeben und in die sich vergrößernde Schneckenwellenkammer überführt. Hierbei ist jedoch eine radiale Zuführung des zu befördernden Materials erforderlich. Weiterhin kann allenfalls eine ungenügende Selbstreinigung erreicht werden.

Die DE 101 50 627 A1 zeigt eine Zahnradpumpe gemäß dem Oberbegriff vom Anspruch 1.

Der Erfindung liegt die Aufgabe zugrunde, gegenüber bekannten Zahnradpumpen Verbesserungen zu schaffen und insbesondere eine gute Selbstreinigung und verschleiß- und wartungsarme Lagerung zu ermöglichen.

Diese Aufgabe wird durch den kennzeichnenden Teil vom Anspruch 1 gelöst. Die Unteransprüche beschreiben bevorzugte Weiterbildungen.

Erfindungsgemäß ist somit eine mindestens dreistufige Zahnradpumpe mit Zuführ- und Ausgangsschneckenstufe sowie mittlerer Zahnradstufe vorgesehen. Die mittlere Zahnradstufe ermöglicht eine hohe Förderleistung und Einstellgenauigkeit und verhindert ein Rückschlagen von Druckschwankungen des Eingangs auf die Ausgangsstufe. Die erfindungsgemäße Zahnradstufe weist gehäusefest gelagerte Planetenräder und ein mit den Schneckenwellen rotationsfest verbundenes Sonnenrad auf. Die gehäusefest gelagerten Planetenräder können - anders als in der DE 100 49 730 A1 - wartungs- und verschleißarm, insbesondere mit Wälzlagern, in dem Gehäuse gelagert werden. Durch Transfermixbereiche im Eingangs- und Ausgangsextruder wird zusätzlich zu der Förderung eine Mischung erreicht.

Die Gänge können zur Erreichung eines größeren Querschnitts im Einlassbereich bzw. Auslassbereich über sich im wesentlichen in Umfangsrichtung erstreckende Verbindungskanäle verbunden sein.

Die Erfindung wird im folgenden anhand der beiliegenden Zeichnungen an einer Ausführungsform erläutert. Es zeigen:

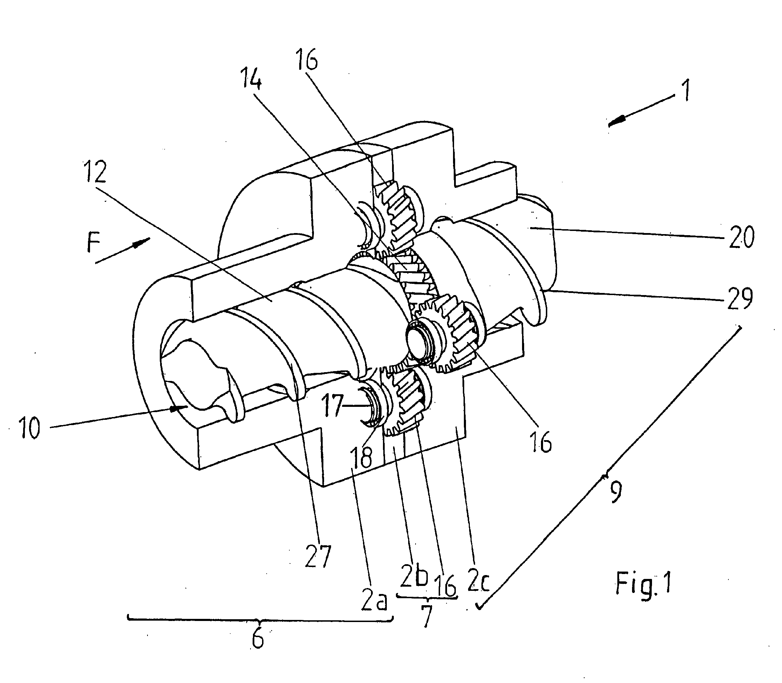

Fig. 1 eine perspektivische Darstellung einer erfindungsgemäßen Zahnradpumpe mit geschnittenem Gehäuse;

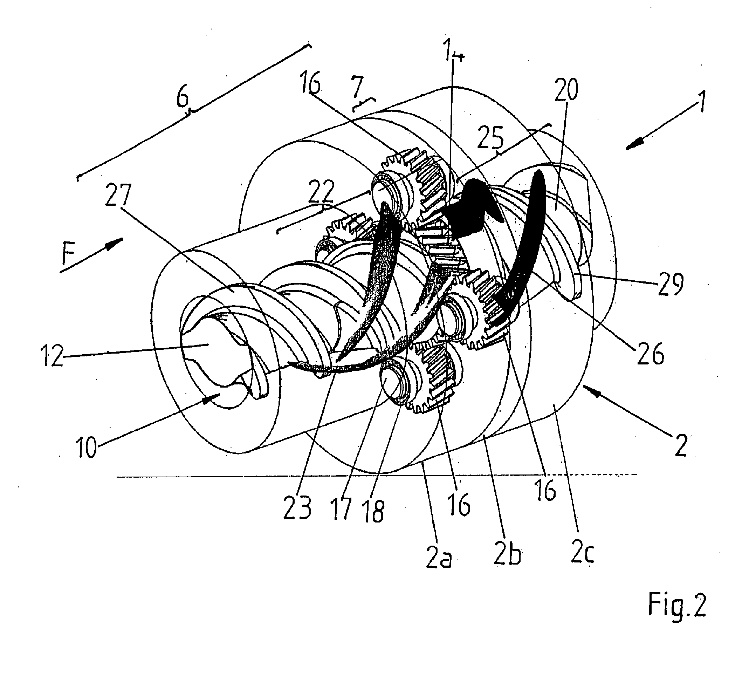

Fig. 2 eine der Fig. 1 entsprechende Darstellung als Durchsicht durch das Gehäuse.

Eine Zahnradpumpe 1 weist ein Gehäuse 2 mit einem ersten Gehäuseteil 2a, einem mittleren zweiten Gehäuseteil 2b und einem dritten Gehäuseteil 2c auf. Die Zahnradpumpe 1 ist hierbei in Förderrichtung F hintereinander in einen Eingangsextruder 6, eine Zahnradstufe 7 und einen Ausgangsextruder 9 unterteilt.

In dem Gehäuse 2 ist eine durchgängige Gehäusebohrung 10 ausgebildet, in die eine Eingangsschneckenwelle 12 gesetzt ist. Auf die Eingangsschneckenwelle 12 ist ein Sonnenrad 14 der Zahnradstufe 7 aufgesetzt, das mit vier Planetenrädern 16 in Eingriff ist. Die Planetenräder 16 sind mit ihren Achsen 17 gehäusefest in Wälzlagern 18 gelagert. Die Wälzlager 18 sind hierbei vorteilhafter Weise in dem ersten Gehäuseteil 2a bzw. dritten Gehäuseteil 2c eingesetzt. Mit dem Sonnenrad 14 und der Eingangsschneckenwelle 12 ist wiederum eine Ausgangsschneckenwelle 20 rotationsstarr verbunden.

Erfindungsgemäß sind sowohl in dem Eingangsextruder 6 als auch dem Ausgangsextruder 9 an die Zahnradstufe 7 angrenzende Transfermixbereiche 22 und 25 ausgebildet. In den Transfermixbereichen 22 und 25 erstrecken sich vier Gänge 23 und 26 gegensinnig zur Neigung der Wendelungen 27 bzw. 29 der Schneckenwellen 12, 20 zu der Zahnradstufe 7 hin und enden in Umfangsbereichen des Sonnenrads 14 zwischen den Planetenrädern 16. Hierbei verringert sich die Gangtiefe der Eingangsschneckenwelle 12 und Ausgangsschneckenwelle 20 zu der Zahnradstufe 7 hin bei gleichzeitig zunehmendem Querschnitt der Gänge 23 und 26. Die Zahl der Gänge 23, 26 stimmt hierbei mit der Anzahl der Planetenräder 16 überein, wobei jeder zuführende Gang 23 das geförderte Material direkt vor einem Planetenrad 16 ausgibt. Das Material wird in Umfangsrichtung in dem zweiten Gehäuseteil 2b gefördert und bei Eingriff der Verzahnung des Planetenrades 16 in die Verzahnung des Sonnenrades 14 an einen abführenden Gang 26 des Transfermixbereiches 25 des Ausgangsextruders 9 ausgegeben.

Die Verzahnungen des Sonnenrads 14 und der Planetenräder 16 können, wie gezeigt, Schrägverzahnungen sein; grundsätzlich sind hierbei auch gerade Verzahnungen und gegebenenfalls auch Pfeilverzahnungen für den Transport verwendbar.

## Patentansprüche

1. Zahnradpumpe für hochviskose Materialien, die aufweist:
ein Gehäuse (2),
eine Zahnradstufe (7) mit einem Sonnenrad (14) und mehreren, gehäusefest
gelagerten Planetenrädern (16),
eine Eingangsschneckenstufe (6), die eine mit dem Sonnenrad (14) rotationsfest
verbundene Eingangschneckenwelle (12) und einen Eingangs-Transfermixbereich (22) aufweist, und
eine Ausgangsschneckenstufe (9), die eine mit dem Sonnenrad (14) rotationsfest verbundene Ausgangsschneckenwelle (20) und einen Ausgangs-Transfermixbereich (25) aufweist,
wobei in dem Eingangs-Transfermixbereich (22) die Eingangsschneckenwelle (12) eine zur Zahnradstufe (7) hin abnehmende Gangtiefe aufweist,
**dadurch gekennzeichnet, dass** in dem Ausgangs-Transfermixbereich (25) die Ausgangsschneckenwelle (20)
eine zur Zahnradstufe (7) hin abnehmende Gangtiefe aufweist und im Gehäuse (2; 2a, 2c) gegensinnig zu den Gängen der Schneckenwellen (12, 20) verlaufende, sich zu der Zahnradstufe (7) hin im Querschnitt vergrößernde Gänge (23, 26) ausgebildet sind, die jeweils zwischen den Planetenrädern (16) enden.

2. Zahnradpumpe nach Anspruch 1, **dadurch gekennzeichnet, dass** die Planetenräder (16) in Wälzlagern (18) in dem Gehäuse (2) gelagert sind.

3. Zahnradpumpe nach Anspruch 1 oder 2, **dadurch gekennzeichnet, dass** das Gehäuse (2) einen die Eingangsschneckenwelle (12) aufnehmenden ersten Gehäuseteil (2a), einen die Planetenräder (16) und das Sonnenrad (14) umgebenden zweiten Gehäuseteil (2b) und einen die Ausgangsschneckenwelle (20) aufnehmenden dritten Gehäuseteil (2c) aufweist.

4. Zahnradpumpe nach Anspruch 2 und Anspruch 3, **dadurch gekennzeichnet, dass** die Wälzlager (18) der Planetenräder (16) in dem die Eingangsschneckenwelle (12) aufnehmenden ersten Gehäuseteil (2a) und dem die Ausgangsschneckenwelle (20) aufnehmenden dritten Gehäuseteil (2c) aufgenommen sind.

5. Zahnradpumpe nach einem der vorherigen Ansprüche, **dadurch gekennzeichnet, dass** die Schneckenwellen (12, 20) miteinander rotationsfest, vorzugsweise formschlüssig, verbunden sind und das Sonnenrad (14) auf eine der Schneckenwellen (12, 20) aufgesetzt ist.

6. Zahnradpumpe nach einem der vorherigen Ansprüche, **dadurch gekennzeichnet, dass** die Gangtiefen der Schneckenwelle (12, 20) zu der Zahnradstufe (7) hin verschwinden.

7. Zahnradpumpe nach einem der vorherigen Ansprüche, **dadurch gekennzeichnet, dass** die Zahnradstufe (7) vier Planetenräder (16) aufweist und das Gehäuse in den die Transfermixbereichen (22, 25) jeweils vier Gänge (23, 26) aufweist.

8. Zahnradpumpe nach einem der vorherigen Ansprüche, **dadurch gekennzeichnet, dass** im ersten Gehäuseteil (2a) und/oder im dritten Gehäuseteil (2c) Verbindungskanäle ausgebildet sind, die die Gänge (23) des Eingangs-Transfermixbereichs (22) bzw. die Gänge (26) des Ausgangs-Transfermixbereichs (25) miteinander verbinden.

9. Zahnradpumpe nach einem der vorherigen Ansprüche, **dadurch gekennzeichnet, dass** die Gänge (23) des Eingangs-Transfermixbereichs (22) gegenüber den Gängen (26) des Ausgangs-Transfermixbereichs (25) in Umfangsrichtung beabstandet sind.

## Claims

1. Gear pump for highly viscous materials, comprising a housing (2), a gear stage (7) comprising a sun wheel (14) and a plurality of planet wheels (16) which are mounted so as to be fixed to the housing, an input screw stage (6) which has an input screw shaft (12) that is rotationally engaged with the sun wheel (14) and an input transfer mix region (22), and an output screw stage (9) which has an output screw shaft (20) that is rotationally engaged with the sun wheel (14) and an output transfer mix region (25), the input screw shaft (12) having a flight depth that decreases towards the gear stage (7) in the input transfer mix region (22), **characterised in that** the output screw shaft (20) has a flight depth that decreases towards the gear stage (7) in the output transfer mix region (25) and flights (23, 26) are formed in the housing (2; 2a, 2c) which extend in an opposite direction to the flights of the screw shafts (12, 20), have a cross-section that increases towards the gear stage (7) and end in each case between the planet wheels (16).

2. Gear pump according to claim 1, **characterised in that** the planet wheels (16) are mounted in roller bearings (18) in the housing (2).

3. Gear pump according to either claim 1 or claim 2, **characterised in that** the housing (2) comprises a first housing part (2a) that receives the input screw shaft (12), a second housing part (2b) that encloses the planet wheels (16) and the sun wheel (14), and a third housing part (2c) that receives the output screw shaft (20).

4. Gear pump according to claims 2 and 3, **characterised in that** the roller bearings (18) of the planet wheels (16) are received in the first housing part (2a) that receives the input screw shaft (12) and the third housing part (2c) that receives the output screw shaft (20).

5. Gear pump according to any one of the preceding claims, **characterised in that** the screw shafts (12, 20) are rotationally engaged with each other, preferably in an interlocking manner, and the sun wheel (14) is attached to one of the screw shafts (12, 20).

6. Gear pump according to any one of the preceding claims, **characterised in that** the flight depths of the screw shaft (12, 20) disappear towards the gear stage (7).

7. Gear pump according to any one of the preceding claims, **characterised in that** the gear stage (7) comprises four planet wheels (16) and the housing comprises respectively four flights (23, 26) in the transfer mix regions (22, 25).

8. Gear pump according to any one of the preceding claims, **characterised in that** connection channels are formed in the first housing part (2a) and/or in the third housing part (2c) which connect the flights (23) of the input transfer mix region (22) or the flights (26) of the output transfer mix region (25) to one another.

9. Gear pump according to any one of the preceding claims, **characterised in that** the flights (23) of the input transfer mix region (22) are spaced from the flights (26) of the output transfer mix region (25) in a circumferential direction.

## Revendications

1. Pompe à engrenages avec des matériaux à viscosité élevée, comprenant:
un carter (2),
un étage d'engrenages (7) avec une roue solaire (14) et plusieurs roues planétaires (16) logées solidement dans le carter,
un étage de vis d'entrée (6), qui présente un arbre de vis d'entrée (12) rattaché fixement à la roue solaire (14) et une zone mixte de transfert d'entrée (22), et
un étage de vis de sortie (9), qui présente un arbre de vis de sortie (20) rattaché fixement à la roue solaire (14) et une zone mixte de transfert de sortie (25),
l'arbre de vis d'entrée (12) présentant une profondeur de filet décroissante en direction de l'étage d'engrenages (7) dans la zone mixte de transfert d'entrée (22),
**caractérisée en ce que** l'arbre de vis de sortie (20) présente une profondeur de filet décroissante en direction de l'étage d'engrenages (7) dans la zone mixte de transfert de sortie (25) et **en ce que** des pas (23, 26) s'étendant dans le sens inverse des pas des arbres de vis (12, 20) et s'agrandissant dans leur section transversale en direction de l'étage d'engrenages (7) sont formés dans le carter (2 ; 2a, 2c), pas qui se terminent entre les roues planétaires (16).

2. Pompe à engrenages selon la revendication 1, **caractérisée en ce que** les roues planétaires (16) sont logées dans des paliers à roulement (18) dans le carter (2).

3. Pompe à engrenages selon la revendication 1 ou 2, **caractérisée en ce que** le carter (2) présente une première partie de carter (2a) logeant l'arbre de vis d'entrée (12), une deuxième partie de carter (2b) entourant les roues planétaires (16) et la roue solaire (14) et une troisième partie de carter (2c) logeant l'arbre de vis de sortie (20).

4. Pompe à engrenages selon la revendication 2 et la revendication 3, **caractérisée en ce que** les paliers à roulement (18) des roues planétaires (16) sont logés dans la première partie de carter (2a) logeant l'arbre de vis d'entrée (12) et dans la troisième partie de carter (2c) logeant l'arbre de vis de sortie (20).

5. Pompe à engrenages selon l'une quelconque des revendications précédentes, **caractérisée en ce que** les arbres de vis (12, 20) sont rattachés l'un à l'autre de façon à empêcher toute rotation, de préférence par liaison par blocage, et la roue solaire (14) est placée sur un des arbres de vis (12, 20).

6. Pompe à engrenages selon l'une quelconque des revendications précédentes, **caractérisée en ce que** les profondeurs de filet des arbres de vis (12, 20) disparaissent en direction de l'étage d'engrenages (7).

7. Pompe à engrenages selon l'une quelconque des revendications précédentes, **caractérisée en ce que** l'étage d'engrenages (7) présente quatre roues planétaires (16) et le carter présente à chaque fois quatre pas (23, 26) dans les zones mixtes de transfert (22, 25).

8. Pompe à engrenages selon l'une quelconque des revendications précédentes, **caractérisée en ce que** des canaux de jonction sont formés dans la première partie de carter (2a) et/ou la troisième partie de carter (2c), canaux qui relient respectivement les pas (23) de la zone mixte de transfert d'entrée (22) et les pas (26) de la zone mixte de transfert de sortie (25).

9. Pompe à engrenages selon l'une quelconque des revendications précédentes, **caractérisée en ce que** les pas (23) de la zone mixte de transfert d'entrée (22) sont espacés dans le sens circonférentiel par rapport aux pas (26) de la zone mixte de transfert de sortie (25).
